# EUROPÄISCHE PATENTANMELDUNG

(11) **EP 2 455 626 A2**
(43) Veröffentlichungstag der Anmeldung: **23.05.2012**
(21) Anmeldenummer: 11189297.2
(22) Anmeldetag: 16.11.2011
(51) Int. Cl.: F16B 35/06

(54) **Schraube**

(30) Priorität: 17.11.2010 DE 102010060618
(71) Anmelder: Chmielewski, Marco, 60598 Frankfurt (DE)
(72) Erfinder: Chmielewski, Marco, 60598 Frankfurt (DE)
(74) Vertreter: Kleine, Hubertus

(57) **Zusammenfassung**

Die Erfindung betrifft eine Schraube, insbesondere zur Verwendung mit einem Wanddübel, die einen Kopf (20) und einen in eine Spitze (13) mündenden und mit einem Gewindeabschnitt (11) versehenen Schaft (10) aufweist. Die Schraube zeichnet sich dadurch aus, dass der Schaft (10) zwischen dem Gewindeabschnitt (11) und dem Kopf (20) als Nocken (14) ausgebildet ist.

## Beschreibung

Die Erfindung betrifft eine Schraube, insbesondere zur Verwendung mit einem Wanddübel.

Solche Schrauben weisen typischerweise einen vorne spitz zulaufenden Gewindeabschnitt auf, der mit einem Gewinde versehen ist, wie es bei Holzschrauben oder bei selbstschneidenden Schrauben üblich ist. Sie werden entweder zusammen mit Wandbefestigungselementen, wie z. B. einem Wanddübel, insbesondere einem Spreizdübel, oder auch unmittelbar, z. B. bei Wänden in Holzbauweise, zum Befestigen oder Aufhängen von Gegenständen an Wänden eingesetzt. Gegenstände, für die diese Befestigungsart geeignet ist, sind beispielsweise Regale, Bilder, Spiegel, Hängeschränke und so weiter. Ein geeigneter Spreizdübel, um derartige Schrauben zum Befestigen oder Aufhängen von Gegenständen an Wänden aus Gesteinsmaterial, also z. B. Mauerwerk oder Beton, einsetzen zu können, ist beispielsweise aus der Druckschrift DE 1 838 086 U bekannt.

Häufig sind zwei solcher Schrauben nebeneinander beabstandet, z. B. im rechten oberen und im linken oberen Bereich des Gegenstands zu dessen Befestigung vorgesehen. Durch Ungenauigkeiten beim Anzeichnen oder bedingt durch ein Verlaufen des Bohrers beim Vorbohren von Dübellöchern oder beim direkten Eindrehen von Schrauben, z. B. in Holzwände, kommt es nicht selten vor, dass befestigte oder aufgehängte Gegenstände nicht waagerecht ausgerichtet sind. Bei großen und schweren Gegenständen, wie beispielsweise Hängeschränken, sind zur Korrektur solcher Fehlpositionierungen der Befestigungsschrauben Einstellelemente mit vertikal angeordneten zusätzlichen Stellschrauben bekannt, um die Gegenstände trotz der nicht korrekt positionierten Befestigungsschrauben waagerecht ausrichten zu können. Solche zusätzlichen Einstellelemente sind jedoch aufwändig und teuer und von daher bei kleineren Gegenständen, wie z. B. Bilderrahmen oder kleinen Regalen o.ä., unüblich. Bei solchen Gegenständen ist es meist unumgänglich, zumindest eines der beiden Dübellöcher neu zu bohren oder unter Gewaltanwendung zu versuchen, eine oder beide Befestigungsschrauben in eine bessere Position zu bringen, um den Gegenstand in einem zweiten Versuch korrekt ausgerichtet anzubringen.

Es ist daher eine Aufgabe der vorliegenden Erfindung, eine einfache Möglichkeit zur Ausrichtung eines mit Schrauben an einer Wand befestigten oder aufgehängten Gegenstandes zu schaffen.

Diese Aufgabe wird durch eine Schraube mit den Merkmalen von Patentanspruch 1 gelöst. Weitere Ausgestaltungen und vorteilhafte Weiterbildungen sind in den abhängigen Ansprüchen angegeben. Die Aufgabe wird weiterhin durch eine Verwendung einer derartigen Schraube gemäß Anspruch 13 gelöst.

Erfindungsgemäß weist die Schraube einen Kopf und einen in eine Spitze mündenden und mit einem Gewindeabschnitt versehenen Schaft auf und zeichnet sich dadurch aus, dass der Schaft zwischen dem Gewindeabschnitt und dem Kopf als Nocken ausgebildet ist.

Die nockenförmige Ausgestaltung eines Teils des Schafts der Schraube bedingt einen Hub der radialen Außenfläche dieses Bereichs des Schafts beim Verdrehen der Schraube. Ein zu seiner Befestigung auf diesen Teil des Schafts aufliegender Gegenstand kann entsprechend an der Auflagestelle um diesen Hub in seiner vertikalen Position verändert werden. Durch Verdrehen einer oder beider von zwei nebeneinander eingesetzten Schrauben zur Anbringung eines Gegenstands an eine Wand kann der Gegenstand so auf einfache Weise waagerecht ausgerichtet werden.

Im Folgenden wird die Erfindung anhand von zwei Ausführungsbeispielen mit Hilfe von Figuren näher erläutert.

Die Figuren zeigen:
- Fig. 1: eine schematische Ansicht einer Schraube in einem ersten Ausführungsbeispiel;
- Fig. 2: eine Draufsicht auf die Schraube im ersten Ausführungsbeispiel;
- Fig. 3: eine Seitenansicht auf die Schraube des ersten Ausführungsbeispiels;
- Fig. 4: eine Schnittansicht der Schraube des ersten Ausführungsbeispiels;
- Fig. 5: eine schematische Ansicht einer Schraube in einem zweiten Ausführungsbeispiel;
- Fig. 6: eine Draufsicht auf die Schraube des zweiten Ausführungsbeispiels;
- Fig. 7: eine Seitenansicht der Schraube des zweiten Ausführungsbeispiels;
- Fig. 8: eine schematische Ansicht einer Schraube in einem dritten Ausführungsbeispiel;
- Fig. 9: eine Draufsicht auf die Schraube des dritten Ausführungsbeispiels und
- Fig. 10: eine Seitenansicht der Schraube des dritten Ausführungsbeispiels.

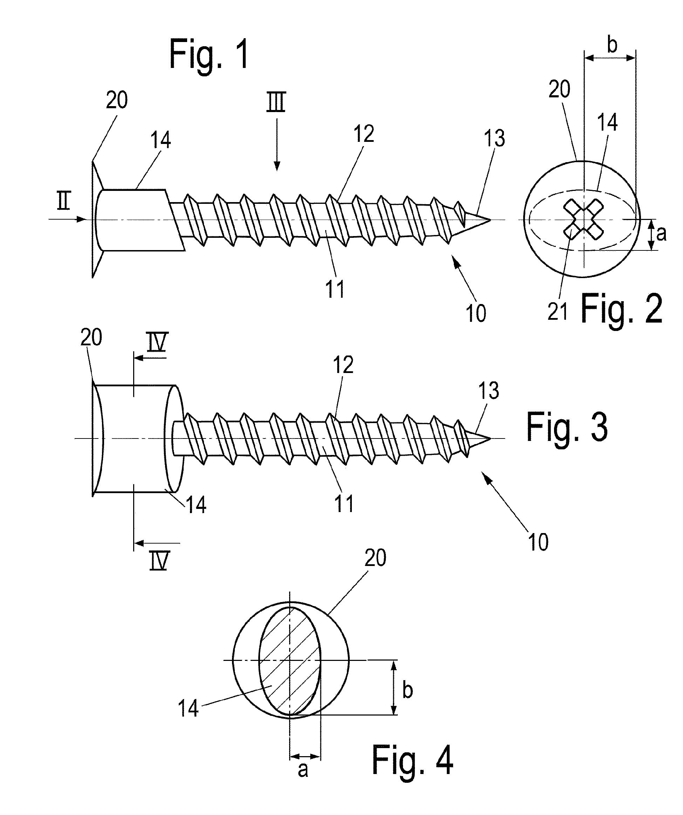

Figur 1 zeigt in einer schematischen Darstellung eine Schraube mit einem Schaft 10 und einem Kopf 20. Der Schaft 10 weist einen Gewindeabschnitt 11 auf, der mit einem Gewinde 12 versehen ist. Der Gewindeabschnitt 11 mündet auf der dem Kopf 20 abgewandten Seite der Schraube in eine Spitze 13.

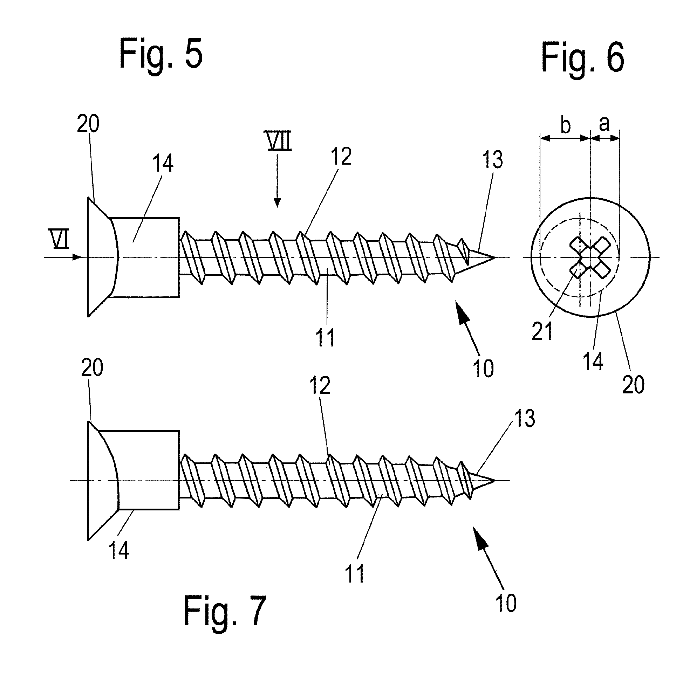

Der Gewindeabschnitt 11 und das Gewinde 12 der Schraube sind in bekannter Art wie bei einer Holzschraube oder einer selbstschneidenden Schraube, häufig auch Spanplattenschraube genannt, ausgeführt. Die dargestellte Schraube eignet sich somit entweder zum unmittelbaren Einschrauben in eine Wand in Holzbauweise oder zur Verwendung im Zusammenhang mit einem Befestigungsdübel, der in ein in die Wand eingebrachtes Dübelloch eingesetzt wird. Zwischen dem Gewindeabschnitt 11 und dem Kopf 20 ist der Schaft 10 als ein Nocken 14 ausgebildet. Im dargestellten Ausführungsbeispiel schließt sich der Nocken unmittelbar an das Gewinde an. Alternativ kann der Nocken beabstandet von dem Gewindeabschnitt 11 positioniert sein, so dass ein nicht profilierter Bereich des Schafts 10 vorhanden ist. Der Übergangsbereich zwischen dem Nocken 14 und dem Schaft 10 ist im gezeigten Ausführungsbeispiel schräg angeschnitten. Andere Ausgestaltungen des Übergangsbereichs sind hier ebenso möglich, insbesondere ein senkrecht zur Längsachse der Schraube verlaufender stufenförmiger Übergang, wie in dem in den Figuren 5 bis 7 dargestellten Ausführungsbeispiel, oder ein kegelförmiger Übergang.

Figur 2 zeigt die Schraube aus Figur 1 in einer schematischen Draufsicht auf ihren Kopf 20. Der Kopf 20 ist bekannt mit einem kreisförmigen Umfang ausgeführt und weist zentral eine Werkzeugaufnahme 21 auf. Der Kopf 20 ist somit symmetrisch zur Längsachse der Schraube ausgeführt. Die Werkzeugaufnahme 21 ist im gezeigten Ausführungsbeispiel eine Kreuzschlitz-Aufnahme. In alternativen Ausgestaltungen können hier jedoch weitere bekannte Ausgestaltungen von Werkzeugaufnahmen eingesetzt werden, insbesondere eine Einfachschlitz-Aufnahme, eine Innensechskant-Aufnahme oder eine Innenvielzahn-Aufnahme, die auch als Torx bezeichnet wird.

In Figur 2 ist die verdeckte Umrisslinie des Nockens 14 eingezeichnet, woraus ersichtlich ist, dass der Nocken 14 einen elliptischen Querschnitt aufweist. Häufig ist vorgesehen, Gegenstände zur Befestigung auf den Schaft von zwei in eine Wand eingeschraubten und leicht herausstehenden Befestigungsschrauben aufzulegen. Zu diesem Zweck sind z. B. Löcher, ggf. in Schlüssellochform, in einer Rückwand des Gegenstands vorgesehen, oder es ist ein überstehender und hinterschnittener oberen Rand am Gegenstand ausgebildet. Bei einem Einsatz der erfindungsgemäßen Schrauben als Befestigungsschrauben bieten die Nocken 14, auf denen der aufzuhängende Gegenstand dann aufliegt eine einfache Möglichkeit, um die waagerechte Ausrichtung des Gegenstands auch nach dem Einschrauben der Schrauben in die Wand zu korrigieren, indem eine oder beide der Schrauben um bis zu 90° (eine viertel Umdrehung) verdreht werden. Um eine sichere Auflage zu gewährleisten, sollte der Nocken 14 in der Längsrichtung der Schraube eine gewisse Länge, bevorzugt eine Länge von einigen Millimetern, beispielsweise 5 mm, nicht unterschreiten.

Wenn, wie in Figur 2 gezeigt, die radiale Auflagefläche des Nocken 14 einen minimalen Abstand a von der Längsachse der Schrauben und einen maximalen Abstand b von dieser Längsachse der Schraube aufweist, weist die radiale Außenfläche des Nockens 14 bei einer Drehung der Schraube um die Längsachse einen Hub von einem Betrag (b - a) auf. Entsprechend kann ein auf den Nocken 14 aufliegende Gegenstand an jeder seiner aufliegenden Seiten um einen Betrag (b - a) in der Höhe verstellt werden. Bei Schrauben typischer Größe, ausgelegt zur Verwendung mit einem üblichen Dübel mit 6 mm oder 8 mm Außendurchmesser, kann der Nocken 14 beispielsweise Abstände a=2mm und b= 6 mm aufweisen, was einen möglichen Hub von 4 mm mit jeder der Schrauben erlaubt. Eine ungewollte Fehlpositionierung, z. B. durch Verlaufen des Bohrers beim Einbringen der Dübellöcher in die Wand, ist auf diese Weise leicht korrigierbar.

Im dargestellten Ausführungsbeispiel ist der Querschnitt des Nockens 14 elliptisch ausgeführt, wobei die Ellipse zentriert angeordnet ist, also symmetrisch um die Längsachse der Schraube. In alternativen Ausgestaltungen kann eine andere Querschnittsform als die einer Ellipse vorgesehen sein, der Querschnitt kann beispielsweise oval oder eierförmig ausgestaltet sein. Falls der Nocken 14 zentriert zur Längsachse angeordnet ist, ist lediglich eine unrunde Ausgestaltung maßgeblich, wobei zur besseren Einstellbarkeit die äußere radiale Außenfläche des Nockens 14 glatt und ohne Kanten oder Stufen ausgeführt sein sollte. Zudem ist bevorzugt, dass der Hub, also die Differenz der Abstände b und a, mindestens in etwa so groß ist wie der Durchmesser des Schaftes 10 in seinem an den Nocken 14 angrenzenden Abschnitt. Bei einer Schraube zur Verwendung mit einem üblichen Dübel mit 6 mm Außendurchmesser weist der Schaft in etwa einen Durchmesser von 3 mm auf. Es ist dann bevorzugt, dass der Hub mindestens ebenfalls 3 mm beträgt.

Figur 3 zeigt die Schraube gemäß dem ersten Ausführungsbeispiel in einer Seitenansicht, die gegenüber der in Figur 1 dargestellten Ansicht die Schraube nach einer Vierteldrehung um ihre Längsachse wiedergibt. Der Vergleich der Darstellung in Figur 1 und Figur 3 zeigt nochmals den unrunden Querschnitt des Nockens 14. Dieser ist ebenfalls in dem in Figur 4 wiedergegebenen Schnittbild entlang der in Figur 3 eingezeichneten Schnittlinie durch den Nocken 14 mit Blickrichtung auf den Kopf 20 der Schraube ersichtlich.

Figur 5 zeigt in einer zur Figur 1 analogen Darstellung eine Ansicht einer Schraube in einem zweiten Ausführungsbeispiel. Gleiche Bezugszeichen kennzeichnen in diesem Ausführungsbeispiel gleiche oder gleich wirkende Elemente wie beim ersten Ausführungsbeispiel.

Wiederum weist die Schraube einen Schaft 10 mit Gewindeabschnitt 11 mit aufgebrachtem Gewinde 12 und einer Spitze 13 auf. Bezüglich der möglichen Ausgestaltung dieser Elemente wird auf das erste Ausführungsbeispiel verwiesen. Zwischen dem Gewindeabschnitt 11 und einem Kopf 20 ist wiederum ein Nocken 14 vorgesehen, der jedoch im Unterschied zum ersten Ausführungsbeispiel hier exzentrisch zur Längsachse der Schraube angeordnet ist und zylinderförmig ausgestaltet ist, also eine kreisförmige Querschnittfläche aufweist. In radialer Richtung stellt sich bei Drehung des Nockens 14 um die Längsachse der Schraube aufgrund der exzentrischen Anordnung ein Hub vom Betrag (b-a) ein, wobei b wiederum den größten radialen Abstand der Außenfläche des Nockens 14 von der Längsachse angibt und a entsprechend den kleinsten radialen Abstand der Au ßenfläche des Nockens 14 von der Längsachse. Bei dieser Ausführungsform wird ein mit zwei Schrauben befestigter Gegenstand bezüglich seiner horizontalen Ausrichtung korrigiert, indem eine oder beide der Schrauben um bis zu 180° (eine halbe Umdrehung) verdreht werden.

Wie in der Draufsicht auf den Kopf 20 in Figur 6 ersichtlich, ist ebenfalls eine zentrale Werkzeugaufnahme 21 vorgesehen, die hier wiederum als Kreuzschlitzaufnahme ausgeführt ist. Figur 7 zeigt analog zu Figur 3 die Schraube des zweiten Ausführungsbeispiels in einer Seitenansicht, die gegenüber der in Figur 5 gezeigten Ansicht um 90° um die Längsachse der Schraube gedreht ist.

Eine Kombination des ersten und zweiten Ausführungsbeispiels, bei der ein Nocken 14 mit nicht kreisförmigem Querschnitt, z. B. mit einem ovalen oder elliptischen Querschnitt, in einer bezüglich des Schafts 10 exzentrischen Anordnung vorgesehen ist, ist ebenfalls möglich.

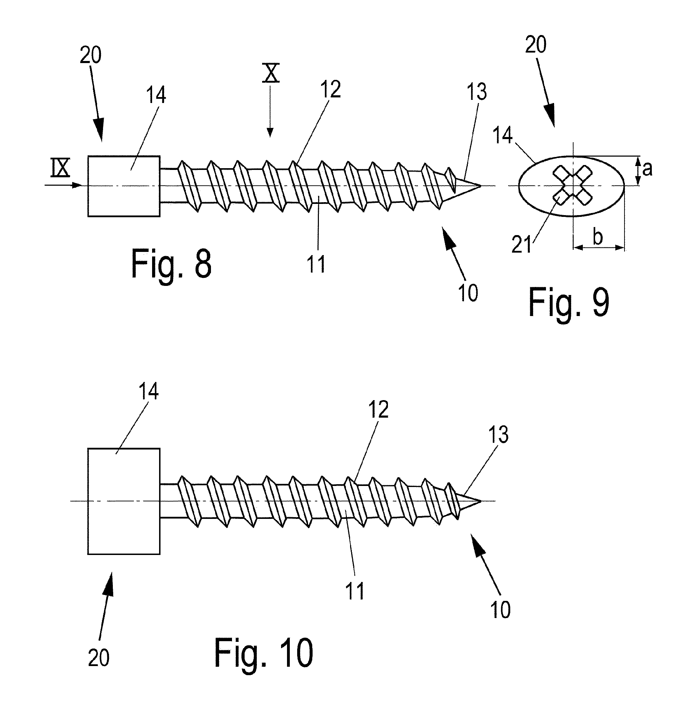

Figur 8 zeigt in einer zur Figur 1 analogen Darstellung eine Ansicht einer Schraube in einem dritten Ausführungsbeispiel. Gleiche Bezugszeichen kennzeichnen auch in diesem Ausführungsbeispiel gleiche oder gleich wirkende Elemente wie beim ersten Ausführungsbeispiel.

Wiederum weist die Schraube einen Schaft 10 mit Gewindeabschnitt 11 mit aufgebrachtem Gewinde 12 und einer Spitze 13 auf. Bezüglich der möglichen Ausgestaltung dieser Elemente wird auf das erste Ausführungsbeispiel verwiesen. Zwischen dem Gewindeabschnitt 11 und einem Kopf 20 ist wiederum ein unrunder, hier abermals elliptischer Nocken 14 vorgesehen. Im Unterschied zum ersten Ausführungsbeispiel ist der Kopf 20 nicht rund ausgeführt, sondern weist den gleichen äußeren Querschnitt wie der Nocken 14 auf. Anders ausgedrückt sind der Nocken 14 und der Kopf 20 integral ausgestaltet.

Wie in der Draufsicht auf den Kopf 20 in Figur 9 ersichtlich, ist ebenfalls eine zentrale Werkzeugaufnahme 21 vorgesehen, die hier wiederum als Kreuzschlitzaufnahme ausgeführt ist. Figur 10 zeigt analog zu Figur 3 die Schraube des dritten Ausführungsbeispiels in einer Seitenansicht, die gegenüber der in Figur 8 gezeigten Ansicht um 90° um die Längsachse der Schraube gedreht ist.

Der Hubmechanismus zur Höhenverstellung bei einem Gegenstand, der auf der Seitenfläche des Nockens 14 aufliegt, kann analog zum ersten Ausführungsbeispiel zur waagerechten Ausrichtung eines Gegenstands eingesetzt werden. Eine Schraube gemäß dem dritten Ausführungsbeispiel ist zur Anbringung von solchen Gegenständen geeignet, die eine hinterschnittene Kante aufweisen, die mit dem Absatz zwischen dem Nocken 14 und dem angrenzenden Abschnitt des Schafts 10 zusammenwirkt, um ein Wegrutschen des Gegenstands in Richtung der Längsachse der Schraube von der Wand weg zu verhindern.

## Patentansprüche

1. Schraube, insbesondere zur Verwendung mit einem Wanddübel, aufweisend einen Kopf (20) und einen in eine Spitze (13) mündenden und mit einem Gewindeabschnitt (11) versehenen Schaft (10), **dadurch gekennzeichnet, dass** der Schaft (10) zwischen dem Gewindeabschnitt (11) und dem Kopf (20) als Nocken (14) ausgebildet ist.

2. Schraube nach Anspruch 1, bei der der Nocken (14) in radialer Richtung einen unrunden Querschnitt aufweist.

3. Schraube nach einem der Ansprüche 1 oder 2, bei der der Nocken (14) exzentrisch angeordnet ist.

4. Schraube nach Anspruch 3, bei der der Nocken (14) in radialer Richtung einen kreisrunden Querschnitt aufweist.

5. Schraube nach einem der Ansprüche 1 bis 4, bei der der Kopf (20) den gleichen Querschnitt wie der Nocken (14) aufweist.

6. Schraube nach einem der Ansprüche 1 bis 5, bei der Nocken (14) eine radiale Außenfläche aufweist, die in unterschiedlichen radialen Richtungen einen minimalen Abstand a zur Längsachse der Schraube und einen maximalen Abstand b zur Längsachse hat.

7. Schraube nach Anspruch 6, bei der die Differenz der Abstände b und a größer ist als ein Durchmesser des Schafts (10) an einem dem Nocken (14) benachbarten Abschnitt.

8. Schraube nach Anspruch 7, bei der die Differenz der Abstände b und a größer als 3 mm und bevorzugt größer als 5 mm ist.

9. Schraube nach einem der Ansprüche 6 bis 8, bei der die radiale Außenfläche glatt ausgebildet ist und insbesondere keine Kanten oder Stufen aufweist.

10. Schraube nach einem der Ansprüche 1 bis 9, bei der der Nocken (14) in Richtung der Längsachse der Schraube eine Länge von mindestens 5 mm aufweist

11. Schraube nach einem der Ansprüche 1 bis 10, bei der der Kopf (20) mit einer zentralen Werkzeugaufnahme (21) versehen ist, die bevorzugt als Kreuzschlitz-Aufnahme oder als Einfachschlitz-Aufnahme ausgebildet ist.

12. Schraube nach einem der Ansprüche 1 bis 11, bei der der Schaft (10) im Gewindeabschnitt (11) mit einem Gewinde (12) profiliert ist, das dem einer Holzschraube entspricht und/oder selbstschneidend ist.

13. Verwendung einer Schraube gemäß einem der Ansprüche 1 bis 12 zusammen mit einem Wanddübel.
